# EUROPÄISCHE PATENTANMELDUNG

(11) **EP 0 648 593 A2**
(43) Veröffentlichungstag der Anmeldung: **19.04.1995**
(21) Anmeldenummer: 94115538.4
(22) Anmeldetag: 03.10.1994
(51) Int. Cl.: B29C 70/08, B29C 70/20, B29C 70/34, C22C 1/09

(54) **Verfahren zum Herstellen von langfaserverstärkten Bauteilen**

(30) Priorität: 19.10.1993 DE 4335558
(71) Anmelder: DEUTSCHE FORSCHUNGSANSTALT FÜR LUFT- UND RAUMFAHRT e.V., D-51147 Köln (DE)
(72) Erfinder: Leucht, Rolf, Dipl.-Ing., D-53842 Troisdorf (DE); Weber, Klaus, Dipl.-Ing., D-50670 Köln (DE)
(74) Vertreter: Hilleringmann, Jochen, Dipl.-Ing.

(57) **Zusammenfassung**

Das langfaserverstärkte Bauteil (34) besteht aus einer heißgepreßten Schichtenfolge aus Fasermonolagen (24) und Matrixfolien (26). In eine Pressform mit einem Ober- (18) und einem Unterteil (14) werden abwechselnd mehrere Fasermonolagen und Matrixfolien aus Matrixmaterial eingelegt. Die Fasermonolagen bestehen jeweils aus einer Vielzahl von im wesentlichen parallel verlaufenden Langfasern, die mit Matrixmaterial beschichtet sind. Durch Einwirkung von Druck und Wärme verbindet sich das Matrixmaterial der Langfasern und der Folien und bildet einen Verbund, der das faserverstärkte Bauteil (34) darstellt.

## Beschreibung

Die Erfindung betrifft ein Verfahren zum Herstellen von langfaserverstärkten Bauteilen, insbesondere von Bauteilen, die aus einem spröden und/oder duktilen, d.h. bei hohen Temperaturen (etwa 500 ^{o}C bis 2.000 ^{o}C) und bei hohen Drücken (40 bis 150 N/mm², insbesondere 70 bis 120 N/mm²) verformbaren (Matrix-)Material bestehen, und mit hochfesten und hochtemperaturbeständigen Fasern aus sprödem in radialer Fasererstreckung scherkraftempfindlichem Material verstärkt sind. Bei dem Matrixmaterial handelt es sich um Metall oder eine Metallegierung insbesondere auf Titanbasis.

Es ist allgemein bekannt, die Stabilität und Zugfestigkeit von Bauteilen durch eine Faserverstärkung zu erhöhen, was im Regelfall mit einer Gewichtsersparnis verbunden ist, wenn die Wichte der Faserverstärkung geringer ist als die des übrigen (Matrix-) Materials des Bauteils. Für Spezialanwendungen wie beispielsweise Turbinenschaufeln ist es, was die verbesserten mechanischen Eigenschaften der Faserverstärkung anbelangt, wünschenswert, wenn sich durch die Faserverstärkung die Zugfestigkeit der Turbinenschaufeln in radialer Richtung der Turbine erhöht und ihre Dehnung verringert. Dies läuft auf die Anordnung von einzelnen Fasern in radialer Richtung hinaus.

Mit "Faser" oder "Langfaser" soll im Rahmen dieser Erfindung eine Monofaser gemeint sein, die aus einem Fasermaterial besteht. Die Faser kann eine Seele aufweisen, die von Fasermaterial umgeben ist. Das Fasermaterial selbst kann eine Schutzschicht aufweisen. Bevorzugt ist im Rahmen dieser Erfindung an SiC-Fasern gedacht, die eine Seele aus Kohlenstoff aufweisen, der von SiC als Fasermaterial umgeben ist. Die Schutzschicht weist im wesentlichen Kohlenstoff auf. Die Fasern können - über die Schutzschicht hinaus - beschichtet oder unbeschichtet sein. Bei dem Beschichtungsmaterial handelt es sich um Matrixmaterial, wobei für SiC bevorzugt an eine Titanbasis-Legierung als Matrixmaterial gedacht ist. Sowohl das Matrix- als auch das Fasermaterial können spröde sein, wobei beide Materialien insbesondere die eingangs genannten Eigenschaften aufweisen.

Aus DE 40 21 547 A1 ist ein Verfahren zum Herstellen von faserverstärkten Bauteilen bekannt. Bei diesem bekannten Verfahren wird ein Trägerkörper aus Matrixmaterial mit einer mit Matrixmaterial beschichteten Endlosfaser umwickelt und dieser Wickelkörper anschließend einem heißisostatischen Pressvorgang unterzogen. Dieses bekannte Verfahren ist für Fasern aus insbesondere Siliciumcarbit geeignet, die mit einem Matrixmaterial beschichtet sind, das aus einer Titanbasis-Legierung besteht. Für die Faserverstärkung von Bauteilen, die hauptsächlich in einer Dimension faserverstärkt werden sollen, eignet sich die zuvor beschriebene Wickeltechnik nicht. In DE 40 21 547 A1 ist aber auch ein Verfahren angegeben, bei dem eine Kapsel mit einzelnen Fasermatten ausgelegt wird, um danach dem heißisostatischen Pressvorgang unterzogen zu werden. Dabei bestehen die einzelnen Fasermatten aus nebeneinander angeordneten Langfasern, die in einer Folie aus Matrixmaterial eingebettet sind. Die Herstellung der einzelnen Fasermatten ist recht aufwendig; auch bereitet das ausreichend dichte Ausfüllen der Kapsel mit Fasermatten Probleme, was sich dann nachteilig beim heißisostatischen Pressvorgang auswirkt.

Aus DE 34 10 503 A1 ist ein Verfahren zur Herstellung von Bauteilen aus einem faserverstärkten thermoplastischen Kunststoff bekannt, bei dem in eine zweiteilige Form abwechselnd Matrixmaterial-Folien aus dem Kunststoff und Formgewebe aus dem Faserwerkstoff aufeinandergelegt werden und anschließend bei Temperaturen oberhalb des Kristallitschmelzbereichs des Matrixwerkstoffs und bei Drücken zwischen 10 bar und 200 bar verpreßt werden. Die Fasern der Faserformgewebe erstrecken sich in unterschiedlichen Richtungen und verlaufen dabei winklig und quer zueinander.

Aus DE 41 06 658 A1 ist ein Verfahren zum Herstellen von bandförmigen Formkörpern (sogenannte Prepregs) bekannt. Diese Formkörper weisen nebeneinanderliegende Fasern auf, die in (Kunstharz-)Material eingebettet sind.

Der Erfindung liegt die Aufgabe zugrunde, ein vereinfachtes Verfahren zum Herstellen von langfaserverstärkten Bauteilen anzugeben, wobei diese Bauteile eine komplexe dreidimensionale unregelmäßige Struktur aufweisen können und sich ihr Querschnitt in Richtung des Faserverlaufs verändert.

Zur Lösung dieser Aufgabe wird mit der Erfindung ein Verfahren zum Herstellen von langfaserverstärkten Bauteilen vorgeschlagen, bei dem eine zweiteilige Pressform mit einem Ober- und einem Unterteil erzeugt wird, mehrere Fasermonolagen aus unbeschichteten oder mit einem Matrixmaterial beschichteten im wesentlichen parallelen Langfasern sowie mehrere Matrixfolien aus Matrixmaterial erzeugt werden, die Fasermonolagen und die Matrixfolien abwechselnd in das Ober- und/oder Unterteil der Pressform eingelegt werden, bis die gewünschte Anzahl von Fasermonolagen und Matrixfolienlagen erreicht ist und die Schichtenfolge aus Fasermonolagen und Matrixfolien in der Pressform nach dem Zusammensetzen von dessen Ober- und Unterteil einem Heißpressvorgang unterzogen wird.

Bei dem erfindungsgemäßen Verfahren werden mehrere Fasermonolagen verwendet. Jede Fasermonolage besteht aus mehreren nebeneinander angeordneten und im wesentlichen parallel zueinander verlaufenden Langfasern, die mit Matrixmaterial beschichtet sein können aber nicht müssen. Mit Matrixmaterial beschichtete Langfasern können sich in jeder Fasermonolage dabei berühren, während unbeschichtete Fasern pro Fasermonolage auf Abstand gehalten werden sollten. Die einzelnen parallelen Langfasern einer Lage sind durch geeignete Maßnahmen relativ zueinander gehalten und fixiert. Die Fasermonolagen werden abwechselnd mit Matrixfolien aus Matrixmaterial in die Pressform, d.h. in dessen Ober- und/oder in dessen Unterteil eingelegt. Dabei weisen die Matrixfolien hauptsächlich Matrixmaterial auf, weisen selbst keine Langfasern auf. Es entsteht stets eine Schichtenfolge, die aus einzelnen Fasermonolagen und einzelnen Matrixfolien zwischen den Fasermonolagen besteht.

Zweckmäßigerweise wird beim Bestücken des Ober- und/oder Unterteils der Pressform mit einer oder mehreren Matrixfolien begonnen, bevor die erste Fasermonolage eingelegt wird. Auf diese Weise wird erreicht, daß sich zwischen der dem Ober- und/oder Unterteil der Pressform nächsten Fasermonolage stets eine oder mehrere Lagen Matrixfolie befinden. Das bzw. die derart präparierten Teile der Pressform werden anschließend zusammengesetzt und heißgepreßt.

Die Matrixfolien können aus unterschiedlichen Materialien mit unterschiedlichen Eigenschaften bestehen. Damit ergibt sich die Möglichkeit, für den Bereich der Außenhaut des Bauteils anforderungsspezifische Materialien zu verwenden, z. B. oxidationsbeständige und/oder hochwarmfeste Materialien. In die Pressform werden also lagenabhängig Matrixfolien unterschiedlicher Materialien eingelegt.

Bei diesem Heißpressen wird die Pressform unter Vakuum bis zur Presstemperatur hochgeheizt. Bei Siliciumcarbit-Fasern mit einer Beschichtung aus einer Legierung auf Titanbasis beträgt diese Temperatur etwa 920^{o} und größer. Anschließend oder gleichzeitig wird auf die bis zur Presstemperatur erhitzten Pressform Preßdruck aufgegeben, und zwar solange, bis der erforderliche Flächendruck erreicht ist. Schließlich wird die Heizung ausgeschaltet und die Pressform unter Druck bis zu einer Temperatur von einigen hundert Grad C, insbesondere etwa 400 ^{o}C abgekühlt. Es ist darauf zu achten, daß sich die Pressform nicht mit dem Matrixmaterial verbindet, weshalb es von Vorteil ist, die Pressform vor dem Auslegen mit einem Trennmittel in insbesondere Pulverform zu versehen. Zweckmäßigerweise sind die Teile der Pressform aus Graphit hergestellt.

Beim Aufheizen der Preßform wird zweckmäßigerweise zunächst bis auf eine unterhalb der Preßtemperatur liegende Vortemperatur aufgeheizt, die insbesondere etwa 1/4 bis 2/5, vorzugsweise etwa 1/3 der Preßtemperatur (für das obige Beispiel ca. 300 ^{o}C) beträgt. Die Voraufheizung dient der Ausgasung der Preßform. Anschließend oder gleichzeitig wird ein Vordruck aufgebaut, der geringer ist als der Preßdruck und etwa 10 % bis 20 % desselben beträgt (im obigen Fall etwa 10 bis 20 N/mm²). Diese Maßnahme dient dem Positionshalten der Langfasern, die vor der eigentlichen Preßdruckaufbringung frei bewegbar sind und lediglich mittels Reibung in der Schichtenfolge gehalten sind. Der Druck und die Temperatur werden dann auf die jeweiligen Maximalwerte (Preßtemperatur und Preßdruck, die materialabhängig gewählt werden) erhöht und für eine gewisse Zeit gehalten, bevor die Preßform abgekühlt und belüftet wird, um das Bauteil zu entnehmen.

Wie bereits oben kurz erwähnt, sind die einzelnen parallelen Langfasern einer Fasermonolage relativ zueinander gehalten und fixiert, um die Handhabung beim Einlegen zu erleichtern. Eine zweckmäßige Maßnahme zur relativen Lagefixierung der Langfasern besteht darin, die Langfasern an ihren axialen Enden untereinander zu verbinden, was beispielsweise durch Einbetten der Enden in Material, insbesondere Klebematerial, erfolgen kann. Über dieses Material, das die Enden der Langfasern nicht notwendigerweise gänzlich umschließen muß, sind die Langfasern miteinander mechanisch verbunden. Dieses Verfahren zur Halterung der parallelen Langfasern kann sowohl bei beschichteten Langfasern, die pro Fasermonolage dicht an dicht liegen, als auch bei nicht beschichteten Langfasern, die pro Fasermonolage auf Abstand gehalten werden müssen, angewendet werden. Eine Alternative zur obigen Positionierungsfixierung besteht darin, die parallelen Langfasern durch winklig, insbesondere quer verlaufende Haltefäden nach Art der Kettfäden eines aus Kett und Schuß bestehenden Gewebes mechanisch miteinander zu verbinden. Die Haltefäden bestehen zweckmäßigerweise aus einem Material, das Bestandteil des Matrixmaterials ist, bei dem es sich im Regelfall um eine insbesondere metallische Legierung handelt. Die Langfasern einer Fasermonolage können auch durch teilweises Festkleben an den benachbarte Fasermonolagen trennenden Matrixfolien fixiert werden. Soweit Klebematerialien oder ähnliche Materialien zum Fixieren der Langfasern verwendet werden, gasen diese aus, wenn die Preßform voraufgeheizt wird. Diese Materialien beeinträchtigen das Materialgefüge des faserverstärkten Matrixmatrial-Bauteils demzufolge nicht. Bei Verwendung von Haltefäden gilt letztendlich selbiges, da deren Material Bestandteil des Matrixmaterials ist; im Bereich der Haltefäden ist lediglich die Konzentration des Haltefadenmaterials (auf das gesamte Bauteil bezogen) örtlich höher.

Aufgrund der Zweiteiligkeit der Pressform ist es möglich, in einer Dimension faserverstärkte Bauteile mit komplexeren Bauteilformen, wie etwa in sich gewundene Turbinenschaufeln zu erzeugen. Dabei ist ferner von Vorteil, daß die Langfasern und das zwischen einzelnen Langfaserlagen befindliche Matrixmaterial getrennt voneinander in Form der Fasermonolagen und der Matrixfolien vorliegt. Dadurch ist die Herstellung der Ausgangsprodukte (Fasermonolagen und Matrixfolien) vereinfacht. Der Heißpressvorgang, bei dem eine Art Diffusionsverschweißung der einzelnen Lagen der Schichtenfolge aus abwechselnd angeordneten Fasermonolagen und Matrixfolien erfolgt, ist ausreichend, um einen festen Verbund der einzelnen Lagen der Schichtenfolge untereinander zu erzielen. Beim Heißpressen geht das Matrixmaterial aufgrund der Druck- und Temperaturbehandlung in einen Zustand besserer Verformbarkeit über und läßt sich gegebenenfalls superelastisch verformen.

Zweckmäßigerweise werden die Matrixfolien zur Reinigung ihrer Oberflächen geätzt, bevor sie auf eine Fasermonolage aufgelegt werden.

Sofern erforderlich, wird die heißgepresste Schichtenfolge nach der Entnahme aus der Pressform geringfügig nachbearbeitet. Insbesondere an den schmalen Seitenkanten kann eine derartige Nachbearbeitung erforderlich sein. Zweckmäßigerweise sind die Begrenzungskanten der Schichtenfolge aus Fasermonolagen und Matrixfolien an den Seiten ebenfalls mit Matrixmaterial versehen, was jedoch nicht zwingend erforderlich ist.

Mit dem erfindungsgemäßen Verfahren lassen sich Bauteile mit dreidimensionaler Struktur herstellen, die in sämtlichen Dimensionen variable Dicken-, Längen- und/oder Breitenerstreckungen sowie Verwindungen aufweisen können. Insbesondere lassen sich mit dem erfindungsgemäßen Verfahren Turbinenschaufeln herstellen. Dabei ist es auch möglich, die Turbinenschaufel und deren Haltesockel, über den die Turbinenschaufel befestigt wird, faserverstärkt herzustellen. Der Haltesockel läßt sich dabei vorteilhafterweise zu seinem der Turbinenschaufel aufgewandten Ende hin konisch aufgeweitet herstellen, wobei die Fasermonolagen der Turbinenschaufel unter Vergrößerung ihrer Abstände in den Haltesockel übergehen. Im Bereich des Haltesockels befinden sich demzufolge zwischen benachbarten Fasermonolagen größere Mengen an Matrixmaterial als innerhalb der Turbinenschaufel selbst. Durch einen derartigen Haltesockel läßt sich die Turbinenschaufel dem Keilprinzip ähnlich an der Struktur, an der sie angebracht ist, gegen Zentrifugalbelastungen gesichert auf einfache Weise halten.

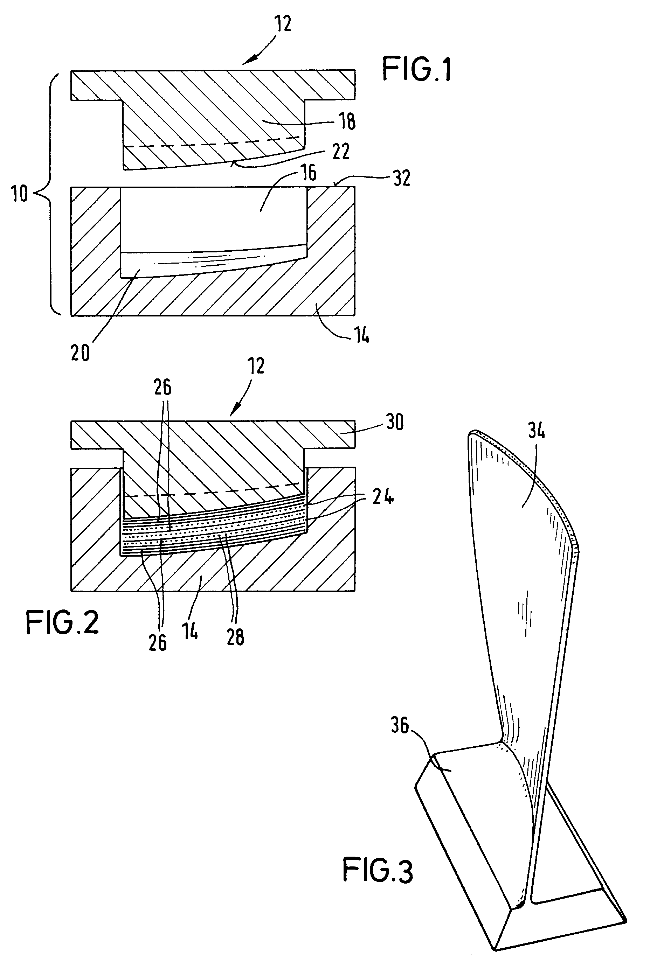

Nachfolgend wird anhand der Figuren ein Ausführungsbeispiel der Erfindung näher erläutert. Die Figuren 1 bis 3 zeigen unterschiedliche Stadien der Herstellung einer langfaserverstärkten Turbinenschaufel.

Zunächst wird aus Graphit eine Pressform 10 gefertigt, die ein Oberteil 12 und ein Unterteil 14 aufweist. Das Oberteil 12 und das Unterteil 14 weisen zueinander komplementäre Formen auf. Das Unterteil 14 ist mit einer Vertiefung 16 versehen, während das Oberteil 12 einen Vorsprung 18 aufweist, der bei zusammengesetzter Pressform 10 in die Vertiefung 16 eingetaucht ist. Der Boden 20 der Vertiefung 16 und die bei zusammengesetzter Pressform 10 dem Boden 20 gegenüberliegende Fläche 22 des Vorsprungs 18 sind derart geformt, daß der sich zwischen ihnen bildende Zwischenraum die Form des herzustellenden Bauteil, in diesem Falle der Turbinenschaufel, bildet.

In die Vertiefung 16 werden mehrere Fasermonolagen 24 und mehrere Matrixfolien 26 eingelegt. Jede Fasermonolage 24 besteht dabei aus einer Vielzahl nebeneinander angeordneter und parallel zueinander verlaufender Langfasern 28, bei denen es sich z.B. um mit Matrixmaterial beschichtete Siliciumcarbit-Fasern handelt. Die Langfasern 28 erstrecken sich durch die gesamte Vertiefung 16 hindurch. Die Matrixfolien 26, die aus dem gleichen Material wie die Faserbeschichtung der Langfasern 28 bestehen, werden abwechselnd mit den Fasermonolagen 24 in die Vertiefung 16 des Unterteils 14 eingelegt. Bei dem Matrixmaterial handelt es sich um eine Legierung auf Titanbasis. Mehrere Matrixfolien 26 und mehrere Fasermonolagen 24 werden eingelegt, bis die gewünschte Anzahl an Schichten erreicht ist. Daraufhin wird das Oberteil 12 der Pressform 10 mit seinem Vorsprung 18 in die Vertiefung 16 eingesetzt, so daß sich die in Figur 2 dargestellte Situation ergibt, in der ein den Vorsprung 18 umgebender Flansch 30 im Abstand zum die Vertiefung 16 umgebenden Rand 32 des Unterteils 14 angeordnet ist.

Jetzt erfolgt der Heißpressvorgang, bei dem das Pressteil 10 unter Vakuum bis zur Presstemperatur von ≧ 920 ^{o}C erhitzt wird. Anschließend wird die Pressform 10 dem erforderlichen Druck von 70 bis 120 N/mm² ausgesetzt, dessen Höhe derart bestimmt ist, daß auf die Schichtenfolge aus Fasermonolagen 24 mit dazwischen angeordneten Matrixfolien 26 der zum Verschmelzen erforderliche Flächendruck wirkt. Das Matrixmaterial erreicht in Folge der Temperatur- und Druckbehandlung seinen Duktilitätspunkt und gelangt in den fließenden Zustand. Nach einer gewissen Haltezeit läßt man die Pressform 10 unter Druck bis zu einer Temperatur von etwa 400°C abkühlen. Nach dem Erkalten der Pressform wird die Schichtenfolge aus dem Unterteil 14 herausgenommen; in dem hier beschriebenen Fall liegt dann die in Figur 3 dargestellte Turbinenschaufel 34 vor. Diese Turbinenschaufel 34 weist einen keilförmigen Haltesockel 36 aus Matrixmaterial auf; dieser Sockel 36 ist zweckmäßigerweise Bestandteil der Turbinenschaufel 34 und einstückig mit dieser, damit eine gute Möglichkeit besteht, die Turbinenschaufel 34 an der Welle der Turbine zu befestigen. Der Sockel 36 besteht aus Matrixmaterial und ist als Negativ-Halbraum in den beiden Formhälften (Ober- und Unterteil) berücksichtigt (in den Fign. 1 und 2 aus Gründen der besseren Übersichtlichkeit nicht dargestellt). Die Fasern der einzelnen Lagen erstrecken sich bis in den Sockel 36 hinein.

## Patentansprüche

1. Verfahren zum Herstellen von langfaserverstärkten Bauteilen, bei dem
- eine zweiteilige Pressform (10) mit einem Ober- und einem Unterteil (12), (14) erzeugt wird,
- mehrere Fasermonolagen (24) mit im wesentlichen parallelen Langfasern (28) und mehrere Matrixfolien (26) aus Matrixmaterial erzeugt werden,
- die Fasermonolagen (24) und die Matrixfolien (26) in das Ober- und/oder Unterteil (12), (14) der Pressform (10) abwechselnd eingelegt werden, bis die gewünschte Anzahl von Fasermonolagen (24) und Matrixfolienlagen (26) erreicht ist,
- das Ober- und Unterteil (12,14) der Pressform (10) zusammengesetzt wird und
- die Schichtenfolge aus Fasermonolagen (24) und Matrixfolien (26) in der Pressform (10) heißgepresst wird.

2. Verfahren nach Anspruch 1, dadurch gekennzeichnet, daß die Preßform (10) nach dem Einlegen der Fasermonolagen (24) und der Matrixfolien (26) und vor dem Heißpressen evakuiert wird.

3. Verfahren nach Anspruch 1 oder 2, dadurch gekennzeichnet, daß Matrixfolien aus unterschiedlichen Materialien verwendet werden, der Eigenschaften anforderungsspezifisch, insbesondere oxidationsbeständig und/oder hochwarmfest.

4. Verfahren nach einem der Ansprüche 1 bis 3, dadurch gekennzeichnet, daß beim Heißpressen die Preßform (10) zunächst auf eine Vortemperatur, die geringer ist als die zum Heißpressen vorgehene Preßtemperatur, voraufgeheizt und einem vorläufigen Druck, der geringer ist als der zum Heißpressen vorgesehene Preßdruck, ausgesetzt wird und daß danach die Temperatur und der Druck bis auf die Preßtemperatur und den Preßdruck erhöht werden.

5. Verfahren nach einem der Ansprüche 1 bis 4, dadurch gekennzeichnet, daß die parallelen Langfasern (28) einer Fasermonolage (24) mittels eines deren Enden verbindenden Fixiermaterials, insbesondere mittels eines Klebematerials fixiert sind.

6. Verfahren nach einem der Ansprüche 1 bis 4, dadurch gekennzeichnet, daß die parallelen Langfasern (28) einer Fasermonolage (24) mittels winklig verlaufender Halteflächen aus einem Bestandteil des Matrixmaterials fixiert sind.

7. Verfahren nach einem der Ansprüche 1 bis 6, dadurch gekennzeichnet, daß die Matrixfolien (26) geätzt werden.

8. Verfahren nach einem der Ansprüche 1 bis 7, dadurch gekennzeichnet, daß die heißgepresste Schichtenfolge nachbearbeitet wird.

9. Verfahren nach einem der Ansprüche 1 bis 8, dadurch gekennzeichnet, daß das Ober- und das Unterteil (12,14) der Pressform (10) aus Graphit bestehen und durch Funkenerosion ausgeformt sind.

10. Bauteil, erhältlich durch ein Verfahren nach einem der Ansprüche 1 bis 9.

11. Verwendung eines Verfahrens nach einem der Ansprüche 1 bis 8 zur Herstellung einer Turbinenschaufel.
